# EUROPÄISCHE PATENTANMELDUNG

(11) **EP 0 782 879 A1**
(43) Veröffentlichungstag der Anmeldung: **09.07.1997**
(21) Anmeldenummer: 96118639.2
(22) Anmeldetag: 20.11.1996
(51) Int. Cl.: B01D 29/11, B01D 29/64, B01D 29/66, B01D 33/06, B01D 33/46, B01D 33/48, B01D 33/62

(54) **Verfahren und Vorrichtung zur Mikro- und Ultrafiltration von Suspensionen**

(30) Priorität: 21.12.1995 DE 19547979
(71) Anmelder: Altenburger Electronic GmbH, 77960 Seelbach (DE)
(72) Erfinder: Hartmann, Uwe, Dr. rer. nat., 77933 Lahr (DE); Schwarz, Friedrich, Dipl.-Ing., 77963 Schwanau (DE); Siegfried, Hans-Günther, Dipl.-Kfm., 77933 Lahr (DE); Willmann, Bernhard, 77960 Seelbach (DE)
(74) Vertreter: Eder, Eugen, Dipl.-Ing.

(57) **Zusammenfassung**

Das Verfahren zur Mikro- und Ultrafiltration kritischer Suspensionen wird mit wenigstens einem rohrförmigen Membranfilter (3, 30) in einem Filtrationsmodul (1) ausgeführt, welches mindestens ein Gehäuse (2; 33, 40, 44) umfaßt. Das Membranfilter (3) wird innerhalb des Filtrationsmoduls (1) auf der äußeren oder inneren Umfangsfläche durch Ausübung eines Vakuums mit suspendiertem Stabilisatormaterial belegt. Die Filtration im Deadend-Verfahren wird anschließend durch Absaugen mittels Vakuum durch die Stabilisatorschicht (9) und das Membranfilter (3) hindurch bis zur Trocknung des Retentats (25) durchgeführt.

## Beschreibung

Die Erfindung betrifft ein Verfahren zur Mikro- und Ultrafiltration kritischer Suspensionen mit den Merkmalen der Oberbegriffe des Patentanspruches 1, des Patentanspruches 2 und des Patentanspruches 11 sowie eine Vorrichtung zur Durchführung dieser Verfahren nach dem Patentanspruch 17.

Es sind Verfahren und Filtervorrichtungen zur Mikro- und Ultrafiltration von Partikeln aus Suspensionen unter Verwendung von rohrförmigen, aus Draht unter Vorspannung gewickelten Membranen bekannt. Eine solche Vorrichtung ist beispielsweise in der DE 44 13 574 C1 beschrieben.

Bekannt sind auch rohrförmige Membranfilter aus Polymeren oder Keramik.

Gefiltert wird nach dem Deadend-Verfahren, wobei das Feed unter Druck an die Außen- oder Innenseite des Filters oder der Membran herangeführt und das Permeat ohne weitere Feedbewegung ausgepreßt wird. Anschließend kann das auf dem Filter oder der Membran abgelagerte Retentat durch Rückspülung abgehoben und ausgeblasen oder ausgespült werden.

Es kann auch im Querstromverfahren gefiltert werden. Hier strömt das Feed an der Membranoberfläche entlang. Es trägt die entstehende Deckschicht fortlaufend ab und ermöglicht so eine kontinuierliche Permeation durch die poröse Membran hindurch. Das jeweilige Retentat wird mehrfach im Kreislauf gefiltert, bis es sich soweit aufkonzentriert hat, daß weitere Filtrationsschritte keine wesentliche Verbesserung mehr bringen. Soweit es die Porenstruktur der Membran erlaubt, ist auch hier eine Rückspülung möglich. Sie hebt die Retentatbestandteile, die durch den Querstrom nicht beseitigt werden können, ab und ermöglicht so deren Austrag.

Aus der US 3 996 131 ist ein Verfahren zur Ultrafiltration bekannt, bei dem eine Membran mit einer Precoat-Schicht belegt wird, um eine frühzeitige Verschmutzung der Membran durch problematische, beispielsweise fettige, Stoffe zu vermeiden.

Es finden sich jedoch keinerlei Hinweise darauf, auf welche Art und Weise diese Precoat-Schicht vorteilhaft aufgebracht werden kann.

Schließlich ist aus der EP 0 335 648 A2 ein Verfahren zur Ultrafiltration und Mikrofiltration bekannt, bei dem eine frühzeitige Verschmutzung der Membran dadurch vermieden wird, daß der Filtrationsvorgang mittels eines permeatseitigen Unterdrucks durchgeführt wird. Für das Reinigen der Membran ist in dieser Druckschrift unter anderem die Möglichkeit offenbart, einen retentatseitigen Unterdruck zu erzeugen, um auf diese Weise Verschmutzungen aus den Poren der Membran zu beseitigen.

Nachteilig ist bei den bekannten Verfahren der hohe Feuchtigkeitsgehalt des Retentats. Er kann bei kritischen Suspensionen mit weichen, schleimigen, fettigen oder öligen Bestandteilen mehr als die Hälfte des Feedgewichts betragen. Höhere Feststoffanteile sind in diesen Fällen kaum zu erzielen, da Filter oder Membran so verstopfen, daß Rückspülungen keine Wirkung mehr zeigen. Zudem könnte ein zu festes Retentat nicht mehr selbsttätig aus dem Filtermodul ausgetrieben werden.

Vor allem in der Abwasser- und Entsorgungstechnologie besteht aber die Forderung, daß Retentate aus der Ultra- und Mikrofiltration zumindest stichfest, vorzugsweise aber befahrbar sein sollen. Nur dann ist, soweit das Retentat keine toxischen Stoffe enthält, eine preisgünstige Ablagerung auf Hausmülldeponien zulässig. Andernfalls ist eine teuere Sonderentsorgung erforderlich. Zudem besteht ein Interesse an möglichst hohen Recyclingraten.

Der Erfindung liegt die Aufgabe zugrunde, Suspensionen, insbesondere kritische Suspensionen, in einem Mikro- oder Ultrafiltrationsverfahren so zu behandeln, daß die Forderung nach zuverlässiger Feststoff-/Flüssigtrennung ebenso erfüllt wird, wie die Forderung nach zumindest stichfestem Retentat.

Die Erfindung löst diese Aufgabe mit den Merkmalen der Patentansprüche 1 bzw. 17.

Um die jeweilige Filtermembran vor instabilen Stoffen zu schützen, die eine schnelle Blockade der Spalten oder Poren der Membran verursachen, wird auf den äußeren Umfang des rohrförmigen Membranfilters eine filterwirksame Stabilisatorschicht durch Ausübung eines permeatseitigen Unterdrucks angesaugt.

Die Filtration wird dabei im Deadend-Verfahren durch Absaugen mittels Vakuum durch die Stabilisatorschicht und das Membranfilter hindurch bis zur Trocknung des Retentats durchgeführt.

Nach einer Ausgestaltung der Erfindung können als Stabilisatormaterial pulverförmige Adsorbentien, Zeolithen, Ionenaustauscher, Kieselgel und Kieselguren, Zellulosefasern, Polymere oder Mischungen aus sogenannten Komponenten sowie aus Material zum Zellaufschluß oder zur Pervaporation verwendet werden.

Vorzugsweise wird das Stabilisatormaterial in dem gleichen Lösungsmittel suspendiert, das sich auch im Feed befindet. So können die pulverförmigen Substanzen in Wasser oder z.B. bei der Filtration von Ölen oder anderen nichtwässrigen Suspensionen im jeweiligen Lösungsmittel suspendiert sein und durch Ansprühen, Zudosieren mit einer Dosierpumpe oder Eintauchen des Membranfilters in die Suspension unter Ausübung eines Vakuums im Membranfilter an die Filteroberfläche angesaugt werden. Das Lösungsmittel der Suspension kann auch aus Permeat bestehen, das in einem vorhergehenden Filtrationsprozeß aus dem jeweiligen Feed gewonnen wurde.

Anschließend wird das zu trennende Feed, bei schweren Ölen erforderlichenfalls nach vorheriger Erwärmung, mit der permeatseitig eingesetzten Vakuumpumpe in das Filtrationsmodul eingesaugt, durch die Stabilisatorschicht und die Membran hindurch gefiltert und in einen unter Vakuum stehenden Permeatbehälter geführt. Auf der Stabilisatorschicht lagern grobe Feststoffe ab, während gelöste Stoffe in die Schicht eindringen und hier bei Bedarf adsorbiert werden. Auf die Filtermembran trifft nur das bereits vorgereinigte Feed. Es ist weitgehend frei von Substanzen, die bevorzugt zu einer Blockade oder Beschädigung der Membranen führen, wie z.B. Fette, Öle, Proteine mit hoher Molekülmasse, Kristalle (z.B. Bariumsulfat), Mikrofasern usw. Aufgabe der weitgehend entlasteten Membran ist es, verbleibende abfiltrierbare Stoffe zurückzuhalten.

Nach einer anderen Ausgestaltung der Erfindung wird nach Erreichen eines vorwählbaren Mindest-Permeatflusses die Feedzufuhr unterbrochen und das im Filtrationsmodul befindliche Restfeed über den Feedrücklauf abgeleitet.

Nach einer weiteren Ausgestaltung der Erfindung bleibt zur Abfiltration des im Stabilisatormaterial und im Membranfilter enthaltene Restfeed und zur weiteren Ab- und Austrocknung des Retentats der durch eine Vakuumpumpe ausgelöste Luftstrom so lange aufrechterhalten, bis der geforderte Trocknungsprozess beendet ist.

Nach einer weiteren Ausgestaltung der Erfindung wird das abgetrocknete Retentat durch Bildung eines Vakuums auf der Feedseite des Filtrationsmoduls von dem Membranfilter abgehoben.

Nach einer weiteren Ausgestaltung der Erfindung kann das abgehobene Retentat mit einem angetriebenen Kolben, der das rohrförmige Membranfilter umschließt und an der Wandung des Filtrationsmoduls anliegt, aus dem Filtrationsmodul ausgepreßt werden.

Das Retentat ist nunmehr weitgehend stich- oder fahrfest, selbst dann, wenn es Öl- oder Fettbestandteile oder andere schmierende Stoffe enthält, da diese von der Stabilisatorschicht aufgenommen und gebunden werden.

Der Auspreßkolben wird anschließend wieder in seine Ausgangsposition zurückbewegt. Der Filterprozeß beginnt von neuem mit dem Anschwemmen des Stabilisatormaterials.

Statt in einem einzigen Gefäß kann das Aufbringen des Stabilisatormaterials und das Filtern auch in mehreren Behältnissen durchgeführt werden, in die das Membranfilter abwechselnd eingesetzt wird.

Nach einer weiteren Ausgestaltung der Erfindung wird das Membranfilter in einen Stabilisatorbehälter eingesetzt und über Unterdruck das Stabilisatormaterial auf den Membranfilter aufgebracht.

Sodann kann manuell, pneumatisch oder hydraulisch die Bewegung zur Überleitung des Membranfilters in einen Feedbehälter erfolgen. Durch Ausübung eines Unterdrucks auf den Membranfilter wird das Feed angesaugt. Die abzufiltrierenden Stoffe lagern sich auf der Stabilisatorschicht und der Membran ab. Das Permeat wird abgesaugt.

Sobald auch hier der Permeatfluß den festgelegten Grenzwert unterschreitet, schwenkt das Membranfilter in einen dritten Behälter, den Retentatbehälter. Hier schließt der obere Dichtungsrand des Membranfilters zunächst durch Druck gegen den Dichtungsrand des Retentatbehälters ab. Anschließend wird im Behälter ein Vakuum erzeugt, das die Dichtungsränder zusätzlich aneinander preßt und vor allem die Retentatschicht vom Membranfilter abhebt.

Nach Aufhebung des Vakuums wird die Membran wieder angehoben. Bei diesem Arbeitsgang streifen ein im oberen Teil des Retentatbehälters befindlicher Abstreifer, vorzugsweise ein mit Druckluft beaufschlagbarer, flexibler, rohrförmiger Wulst oder mehrere mechanisch betätigte schalenförmige Abstreifer Reste des Retentats ab. Diese fallen in den Retentatbehälter. Durch Öffnung eines am Behälterbodens befindlichen Schiebers wird das weitgehend abgetrocknete Retentat in einen Entsorgungsbehälter überführt. Dieser Vorgang kann erforderlichenfalls durch Druckluft begünstigt werden.

Der Filtrationsprozeß beginnt sodann von neuem.

Bei Anlegen eines hohen Filtrations-Unterdrucks, z.B. 10⁻⁶ Tor, können Zellaufschlüsse - und somit Sterilisationen- und Pervaporationen - begünstigt durch das Vakuum, durchgeführt werden. In diesen Fällen wird das für Normalfiltrationen erforderliche Stabilisatormaterial ersetzt oder ergänzt durch Materialien, die den jeweiligen Verfahrensschritt ermöglichen.

Weitere Ausgestaltungen der Erfindung ergeben sich aus den Unteransprüchen.

Die Erfindung wird nachfolgend anhand von in der Zeichnung dargestellten Ausführungsbeispielen näher erläutert.

In der Zeichnung zeigen:
- Fig. 1: ein Filtrationsmodul mit rohrförmigem Membranfilter und Auspreßkolben in Ausgangsphase;
- Fig. 2: das Filtrationsmodul nach Fig. 1, bei dem das Membranfilter mit angesaugtem Stabilisator-Material belegt ist;
- Fig. 3: das Filtrationsmodul nach Fig. 1, bei dem zwischen Filtrationsmodulwand und Membranfilter das zu filternde Feed eingesaugt ist;
- Fig. 4: Das Filtrationsmodul nach Fig. 1, bei dem das Feed ausgefiltert und das Retentat sich auf und in der angesaugten Schicht aus Stabilisationsmaterial auf dem Membranfilter abgelagert hat;
- Fig. 5: das Filtrationsmodul nach Fig. 1, bei dem nach der Rückspülung Retentatbestandteile vom Membranfilter zum überwiegenden Teil abgefallen sind und sich Retentat am Boden gesammelt hat;
- Fig. 6: das Filtrationsmodul nach Fig. 1, bei dem der Auspreßkolben das Retentat vom Membranfilter und der Modulwandung abgestreift hat und zusammen mit dem vom Membranfilter abgefallenen Retentat aus dem Filtrationsmodul ausdrückt;
- Fig. 7: ein geändertes Filtrationsmodul, bei dem ein rohrförmiges Membranfilter mit Verschlußdeckel in einen Behälter einsetzbar ist, in dem sich suspendiertes Stabilisatormaterial befindet und einem Dosiergutbehälter, in den das Membranfilter nach Aufbringen des Stalisatormaterials überführbar ist;
- Fig. 8: das Filtrationsmodul nach Fig. 7, bei dem das rohrförmige Membranfilter mit einer angesaugten Stabilisatorschicht belegt ist und in den Behälter überführbar ist, in dem sich zu filterndes Feed befindet;
- Fig. 9: das Filtrationsmodul nach Fig. 7, bei dem das Membranfilter, das mit Retentat aus Stabilisatormaterial und darauf abgelagerten, abfiltrierten Stoffen belegt ist, zu einem Retentatbehälter bewegt wird, der über einen unteren Schieber geöffnet und geschlossen werden kann;
- Fig. 10: das Filtrationsmodul nach Fig. 7, bei dem das Membranfilter, das mit Retentat belegt und mit einem Verschlußdeckel an seiner Oberseite versehen ist, in den Retentatbehälter mit Schieber an seiner Unterseite eingeführt ist;
- Fig. 11: das Filtrationsmodul nach Fig. 7, bei dem das Membranfilter im Retentatbehälter angeordnet ist, wobei das Retentat durch Vakuum im Retentatbehälter abgelöst ist und sich auf dem unteren Schieber abgelagert hat und
- Fig. 12: das Filtrationsmodul nach Fig. 7, bei dem das Membranfilter aus dem Retentatbehälter herausgehoben ist, nachdem ein Abstreifer Restretentat abgestreift hat, wobei am Retentatbehälter der Schieber geöffnet ist, so daß das Retentat nach unten herausfallen kann.

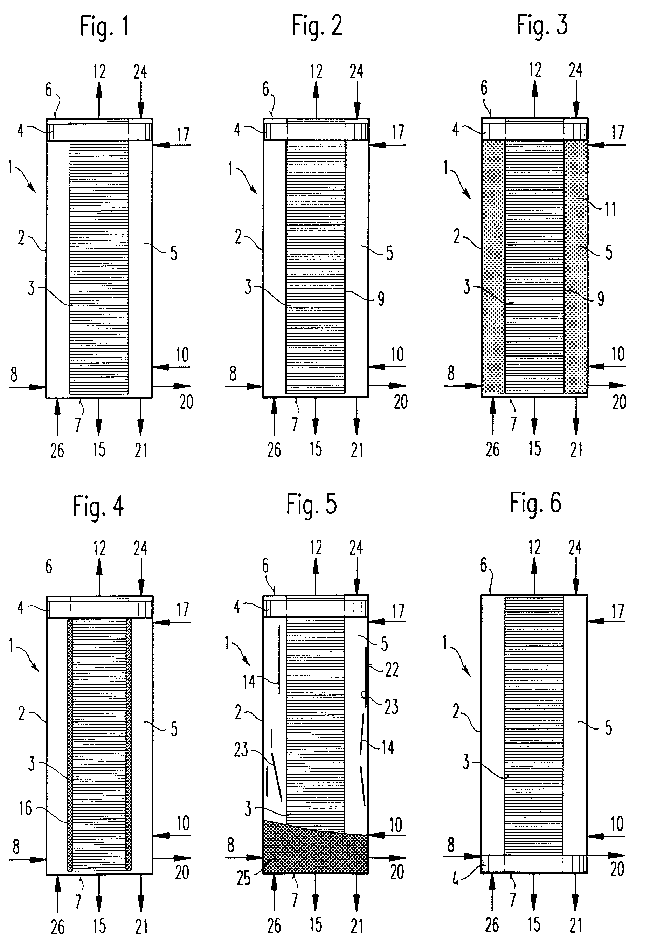

In Fig. 1 ist ein Filtrationsmodul 1 gezeigt, welches ein aufrechtstehendes Gehäuse 2 und ein Membranfilter 3, vorzugsweise aus Metall, Keramik oder einem Polymer, sowie einen Kolben 4 umfaßt, der vorzugsweise mittels Druckluft höhenverschiebbar angetrieben ist. Zwischen koaxialem Gehäuse 2 und Membranfilter 3 ist ein freier Ringraum 5 vorhanden. Das Gehäuse 2 ist an der Oberseite 6 und Unterseite 7 verschlossen.

Das Membranfilter 3 ist vorzugsweise rohrförmig ausgebildet. Es besteht vorzugsweise aus gewickeltem oder ringförmig angeordnetem Draht, kann aber auch aus porösen Polymeren oder Keramiken bestehen. Das untere Ende des Membranfilters 3 ist gegenüber dem Boden des Gehäuses 2 abgedichtet. Das obere Ende des Membranfilters 3 ist gegenüber der Oberseite 6 des Gehäuses 2 abgedichtet.

In das Gehäuse 2 des Filtrationsmoduls 1 wird dann über den Stabilisator-Zugang 8, der nahe dem unteren Ende des Gehäuses 2 vorgesehen ist, eine Suspension mit Stabilisatormaterial eingesaugt. Das Stabilisatormaterial besteht aus pulverförmigen Adsorbentien, Zeolithen, Kieselgelen, Kieselguren, Zellulose oder anderen Materialien mit Adsorptions-, Ionenaustauscher- oder sonstigen Bindungseigenschaften. Als Lösungsmittel dient die gleiche Flüssigkeit, die auch den Hauptbestandteil im Feed ausmacht.

Die Suspension mit Stabilisatormaterial wird durch Ausübung eines Unterdrucks entgegen der Richtung der Schwerkraftwirkung im Gehäuse 2 bewegt. Es wird hierdurch an das Membranfilter 3 herangeführt und dort angelagert.

Stabilisierend wirkt das Material insofern, als es instabile Stoffe, wie z.B. Schleime, Fette, gelartige Substanzen usw., die zu einer Verstopfung des Membranfilters 3 führen können, bereits vor Erreichen der Membran bindet und von dieser fernhält.

Wie aus Fig. 2 ersichtlich, legt sich das Stabilisatormaterial in Form einer Schicht 9 über die Außenumfangsfläche des rohrförmigen Membranfilters 3.

Wie aus Fig. 3 ersichtlich, wird dann über den nahe dem unteren Ende des Gehäuses 2 vorgesehenen Feedeingang 10 Feed 11 in das Filtrationsmodul 1 eingeleitet. Hierfür wird fortgesetzter Unterdruck, z.B. mittels einer Vakuumpumpe, die an den Ausgang 12 angeschlossen ist, ausgeübt. Das Feed 11 wird durch die angeschwemmte Schicht 9 aus Stabilisatormaterial und das Membranfilter 2 hindurchgefiltert. Nach diesem Filtrationsschritt wird das Permeat über den am unteren Ende des Gehäuses 2 vorgesehenen Permeatausgang 15 in einen nicht dargestellten luftdicht verschlossenen Vakuumpermeatbehälter abgesaugt, an dem eine Vakuumpumpe angeschlossen ist.

Das Ansaugen des Feeds 11 hat gegenüber einer Feedzufuhr unter Druck, z.B. über eine Druckpumpe, den Vorteil, daß das auf dem Membranfilter 3 befindliche Stabilisatormaterial und die darin befindlichen Retentatbestandteile aus dem Feed 11 nicht kompaktiert werden. Das kompaktierte Material würde zu einer vorzeitigen Verblockung des Stabilisatormaterials und des Membranfilters 3 führen.

Trotz dieser Filtration verstopft die Retentatschicht 16 aus Stabilisatormaterial und den darin angesammelten, abgefilterten Stoffen nach entsprechendem Anwachsen, wie in Fig. 4 gezeigt, das Filter 3. Durch laufende Messung des Permeatflusses aus dem Permeatausgang 15 kann die Transparenz des Membranfilters 3 mit der darauf befindlichen Retentatschicht 16 überprüft werden.

Sobald der Permeatfluß einen vorwählbaren Grenzwert unterschreitet, wird der Feedeingang 10 geschlossen. Das noch im Filtrationsmodul 1 befindliche Restfeed läuft nach Öffnung des am oberen Ende des Gehäuses vorgesehenen Luftzufuhreingangs 17 (unter Normaldruck) über den Feed-Rücklauf 20 ab, während der Unterdruck am Vakuumausgang 12 aufrechterhalten bleibt. Durch dieses Vakuum - ohne Feednachschub - erfolgt zunächst ein Absaugen von Permeatresten, die sich noch in der Retentatschicht und im Membranfilter 3 befinden. Anschließend trocknet die Retentatschicht 16 durch den mit der Vakuumpumpe über den Permeatausgang 15 bewirkten Luftstrom weiter aus. Dieser Trocknungsprozeß, der gleichfalls durch die Vermeidung einer Kompaktierung der Retentatschicht 16 im Vakuumprozeß begünstigt wird, kann beliebig ausgedehnt werden. Bei verdunstungsfähiger Retentatschicht 16 ist eine nahezu vollständige Trocknung erzielbar. Selbst nichtverdunstungsfähige Substanzen können durch die Retentatschicht 16 nach Sperrung des Feedeingangs 10 weitgehend aufgesaugt und somit abgetrocknet werden. Die Wahl geeigneten Stabilisatormaterials trägt wesentlich zur Aus- und Abtrocknung bei.

Nach weitgehender Trocknung der Retentatschicht 16 wird, bei geschlossenem Luftzufuhreingang 17, ein Vakuum über den Retentatausgang 21 ausgeübt und die Retentatschicht 16 abgehoben, wie in Fig. 5 gezeigt. Ein Teil des Retentats 22 kann an der Wandung des Filtrationsmoduls 1 oder am Membranfilter 3 haften bleiben. Der größere Teil 23 des Retentats 22 fällt von dem Membranfilter 3 ab und sammelt sich im unteren Teil des Filtrationsmoduls 1. Das abgetrocknete Retentat 22, 23 wird anschließend durch einen vorzugsweise mit Druckluft vom Drucklufteingang 24 bewegten Kolben 4 in Richtung Retentatausgang 21 gedrückt. Über einen das Membranfilter 3 umschließenden, nicht dargestellten Lochkranz mit scharfen Lochkanten aus hoch belastbarem Material, z.B. Edelstahl, wird das Retentat 22 durch ein ausreichend groß bemessenes Ventil aus dem Filtrationsmodul 1 nach abwärts herausgepreßt. Der Lochkranz hat die Aufgabe, abgetrocknetes, stückiges Retentat 22 mit Hilfe des Kolbendrucks soweit zu zerkleinern, daß es mühelos das nachgeschaltete Ventil passieren kann.

Der Kolben 4 erreicht nach dem Austreiben des Retentats 25 am Ende des Membranfilters 3 den Boden des Filtrationsmoduls 1, wie in Fig. 6 gezeigt. Der Kolben 4 wird dann durch den Drucklufteingang 26 mit Druckluft beaufschlagt und wieder in seine Ausgangsposition zurückgeführt.

Der Filtrationsprozeß beginnt dann von neuem.

Es ist auch möglich, das Stabilisatormaterial nicht an die Außenumfangsfläche des Membranfilters 3 anzulagern, sondern an die Innenumfangsfläche. In diesem Fall erfolgt die Stabilisatormaterial- und Feedzufuhr über den Zulauf 12 zum Inneren des Membranfilters 3. Der Filtrationsvorgang erfolgt dann vom Inneren der Rohrmembran 3 nach außen. Der Kolben zum Ausstoß des Retentats wird durch Druckluft innerhalb des Membranfilters 3 bewegt.

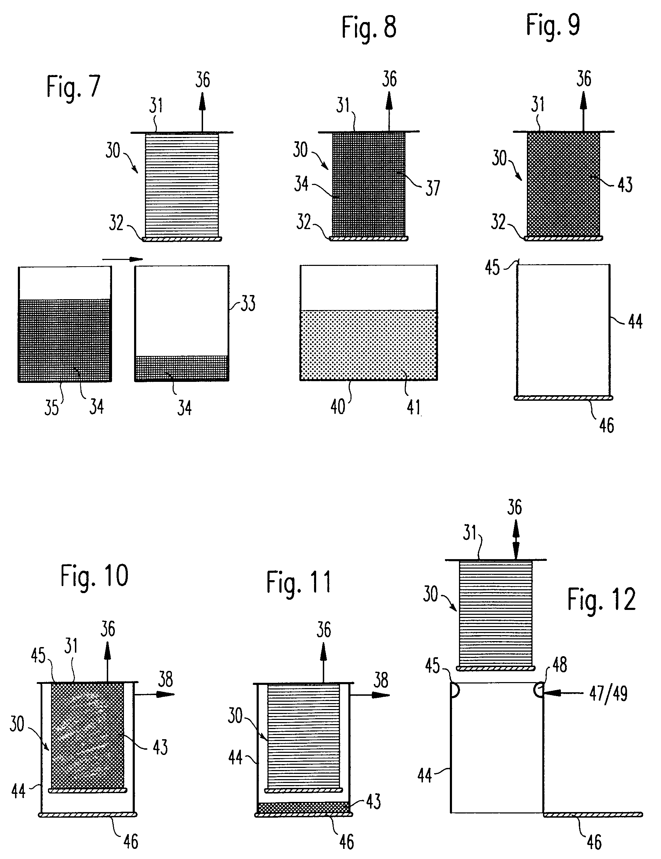

Bei einer geänderten Ausführung nach Fig. 7 wird ein rohrförmiges Membranfilter 30 mit fest oder lösbar verbundenem oberen Verschlußdeckel 31 und einem lösbaren oder festen unteren Verschlußteil 32 verwendet. Das Membranfilter 30 wird in einen offenen aufrechtstehenden Stabilisatorbehälter 33 mit freiem Ringraum eingesetzt. In diesem Behälter 33 befindet sich eine Suspension mit suspendiertem Stabilisatormaterial 34, die aus einem Dosiergutbehälter 35 zugeführt wurde. Über den Vakuumausgang 36 am Verschlußdeckel 31 wird Stabilisatormaterial 34 an das Membranfilter 30 angesaugt, wenn das Membranfilter 34 in den Stabilisatorbehälter 33 eingesetzt ist. Es haftet dort an. Über den Vakuumausgang 36 wird permeiertes Lösungsmittel mit dem Permeat zugeführt.

Das mit Stabilisatormaterial 34 belegte Membranfilter 30 wird sodann aus dem Stabilisatorbehälter 33 in den gleichfalls nach oben offenen, aufrechtstehenden Feedbehälter 40 überführt und eingetaucht. Wie aus Fig. 8 ersichtlich, ist der Behälter 40 mit Feed 41 gefüllt.

Über den Vakuumausgang 36 des Membranfilters 30 wird das Feed 41 angesaugt. Es wird durch die auf das Membranfilter 30 angelagerte Stabilisatorschicht 37 unter der Einwirkung des Vakuums hindurchbewegt. Es gelangt in einen mit Vakuum beaufschlagten dichten, nicht dargestellten, Permeatbehälter. Erforderlichenfalls wird dem Feed 41 im Behälter 40 noch Stabilisatormaterial zudosiert, um auch oberhalb der angeschwemmten Stabilisatorschicht die Transparenz zu erhöhen.

Abzufilternde Stoffe aus dem Feed 41 lagern sich auf und in dem Stabilisatormaterial 34 ab. Sie bilden zusammen mit diesem das am Membranfilter 30 in Fig. 9 dargestellte Retentat 43, in dem die Abtrennung des Permeats durch fortgesetztes Einwirken von Vakuum beschleunigt wird.

In beschriebener Weise wird nach Fig. 10 das mit dem Retentat 43 beladene Membranfilter 30 in einen Retentatbehälter 44 eingesetzt. Dessen oberer Dichtungsrand 45 stimmt mit dem Verschlußdeckel 31 des Membranfilters 30 so überein, daß beide luft- und flüssigkeitsdicht abschließen. Durch den über ein Drei-Wege-Ventil gesteuerten, oben am Behälter 44 vorgesehenen Vakuumausgang 38 wird der Retentatbehälter 44 evakuiert. Das Vakuum fördert zum einen zusätzlich die Dichtung zwischen dem Dichtungsrand 45 des Retentatbehälters 44 und der Dichtung des Verschlußdeckels 31. Vor allem aber löst es das Retentat 43 vom Membranfilter 30 ab. Das Retentat 43 fällt auf den Schieber 46, wie in Fig. 11 gezeigt. Sollte noch Retentat 43 am Membranfilter 30 haften, kann der Vakuumausgang 38 mit einem Drei-Wege-Ventil zu einem Druckeingang gemacht werden. Der Luftdruck löst in diesem Fall noch anhaftende Retentatreste vom Membranfilter 30 ab. Der mechanische Druck auf den Verschlußdeckel 31 des Membranfilters 30 ist so ausreichend zu bemessen, daß zwischen beiden keine Luft entweichen kann.

Wie aus Fig. 12 ersichtlich, wird dann am Retentatbehälter 44 der Schieber 46 geöffnet. Das Retentat 43 fällt durch die Öffnung, erforderlichenfalls begünstigt durch im Eingang 47 über das Drei-Wege-Ventil zugeführte Druckluft. Bei stark an dem Membranfilter 30 haftendem Retentat 43 wird das Membranfilter 30 beim Anheben aus dem Retentatbehälter 44 durch einen ringförmig angeordneten Abstreifer 48 hindurchbewegt. Dieser Abstreifer 48 kann aus einem flexiblen, rohrförmigen Wulst bestehen, der über den Drucklufteingang 49 aufgebläht wird, oder aus mehreren mechanisch betätigten, schalenförmigen Abstreifern, die pneumatisch an das Membranfilter 30 angepreßt werden, sobald das Membranfilter 30 aus dem Retentatbehälter 44 herausgehoben wird. Der Drucklufteingang 49 wird über ein Drei-Wege-Ventil wechselseitig als Vakuumausgang 36 verwendet. Das abgestreifte Rest-Retentat fällt bei geöffnetem Schieber 46 aus dem Retentatbehälter 44.

Das Membranfilter 30 wird sodann in den offenen Stabilisatorbehälter 33 zurückgestellt, wo der Filtrationsprozeß von neuem beginnt.

Gereinigt wird das Membranfilter 30 bedarfsweise nach Lösung des Verschlußteiles 32 außerhalb eines der dargestellten Behälter oder in einem beliebigen Behälter mit Reinigungslösung unter Verwendung des Druck- und Saugeingangs.

## Patentansprüche

1. Verfahren zur Mikro- und Ultrafiltration kritischer Suspensionen mit wenigstens einem rohrförmigen Membranfilter (3, 30) in einem Filtrationsmodul, welches mindestens ein Gehäuse (2; 33, 40, 44) umfaßt, und bei dem das Membranfilter (3) auf der äußeren oder inneren Umfangsfläche mit einer Schicht (9) aus Stabilisatormaterial belegt wird,
**dadurch gekennzeichnet**,
daß die Schicht durch Zuführen von suspendiertem Stabilisatormaterial und Ausübung eines Vakuums gebildet wird und daß die Filtration im Deadend-Verfahren durch Absaugen mittels Vakuum durch die Stabilisatorschicht (9) und das Membranfilter hindurch bis zur Trocknung des Retentats (16) durchgeführt wird.

2. Verfahren nach Anspruch 1,
**dadurch gekennzeichnet**,
daß die Schicht (9) aus Stabilisatormaterial innerhalb des Filtrationsmoduls aufgebracht wird.

3. Verfahren nach Anspruch 1 oder 2,
**dadurch gekennzeichnet**,
daß als Stabilisatormaterial pulverförmige Adsorbentien, Zeolithe, Ionenaustauscher, Kieselgel und Kieselguren, Zellulosefasern, Polymere oder Mischungen aus vorgenannten Komponenten sowie aus Material zum Zellaufschluß oder zur Pervaporation verwendet werden.

4. Verfahren nach einem der Ansprüche 1 bis 3,
**dadurch gekennzeichnet**,
daß das Stabilisatormaterial in dem gleichen Lösungsmittel suspendiert wird, das sich auch im Feed (11) befindet.

5. Verfahren nach einem der vorhergehenden Ansprüche,
**dadurch gekennzeichnet**,
daß nach Erreichen eines vorwählbaren Mindest-Permeatflusses die Feedzufuhr (10) unterbrochen und das im Filtrationsmodul (1) befindliche Restfeed über den Feedrücklauf (20) abgeleitet wird.

6. Verfahren nach einem der vorhergehenden Ansprüche,
**dadurch gekennzeichnet**,
daß zur Abfiltration das im Stabilisatormaterial und im Membranfilter (3) enthaltene Restfeed und zur weiteren Ab- und Austrocknung des Retentats (16) der durch eine Vakuumpumpe ausgelöste Luftstrom solange aufrechterhalten bleibt, bis der geforderte Trocknungsgrad erreicht ist.

7. Verfahren nach einem der vorhergehenden Ansprüche,
**dadurch gekennzeichnet**,
daß das abgetrocknete Retentat (14) durch Bildung eines Vakuums auf der Feedseite des Filtrationsmoduls (1) von dem Membranfilter (3) abgehoben wird.

8. Verfahren nach Anspruch 7,
**dadurch gekennzeichnet**,
daß das abgehobene Retentat (14) mit einem angetriebenen Kolben (4), der das rohrförmige Membranfilter (3) umschließt und an der Wandung des Filtrationsmoduls (1) anliegt, aus dem Filtrationsmodul ausgepreßt wird.

9. Verfahren nach Anspruch 8,
**dadurch gekennzeichnet**,
daß das auszupressende Retentat (25) einem Lochkranz mit scharfen Lochkanten ausgesetzt und dadurch zerkleinert wird, bevor es das Filtrationsmodul über ein Ventil verläßt.

10. Verfahren nach Anspruch 8 oder 9,
**dadurch gekennzeichnet**,
daß der das Retentat (25) auspressende Kolben (4) durch Druckluft in seine Auspreßstellung und in seine Ausgangsposition bewegt wird.

11. Verfahren nach einem der Ansprüche 1 oder 3 bis 10,
**dadurch gekennzeichnet**,
daß das rohrförmige Membranfilter (30) zunächst in einen offenen Stabilisatorbehälter (33) eingesetzt, dort mittels Vakuum mit Stabilisatormaterial (34) belegt und der mit Stabilisatormaterial belegte Membranfilter (30) in einen offenen, mit Feed (41) gefüllten Feedbehälter (40) umgesetzt und dort eingetaucht wird.

12. Verfahren nach Anspruch 11,
**dadurch gekennzeichnet**,
daß durch den Vakuumausgang (36) des Membranfilters (30) Feed aus dem Feedbehälter (40) angesaugt und durch das Stabilisatormaterial (34) hindurchgefiltert wird.

13. Verfahren nach Anspruch 11 oder 12,
**dadurch gekennzeichnet**,
daß vom Vakuumausgang (36) auch nach Beendigung des Filtrationsvorgangs solange Luft durch die Retentatschicht hindurch angesaugt wird, bis diese den gewünschten Trocknungsgrad erreicht hat.

14. Verfahren nach Anspruch 13,
**dadurch gekennzeichnet**,
daß der mit Retentat (43) beladene Membranfilter (30) unter luft- und flüssigkeitsdichtem Verschluß in einen Retentatbehälter (44) eingesetzt wird, der durch den Vakuumausgang evakuiert wird, wodurch das Retentat vom Membranfilter abgelöst wird.

15. Verfahren nach Anspruch 14,
**dadurch gekennzeichnet**,
daß das vom Membranfilter (30) abgelöste Retentat (43) zunächst auf einen Schieber (46) des Retentatbehälters (44) fällt und von dort nach Öffnung des Schiebers gegebenenfalls mit Unterstützung durch Druckluft über ein Drei-Wege-Ventil entsorgt wird, das auch als Vakuumausgang dient.

16. Verfahren nach Anspruch 15,
**dadurch gekennzeichnet**,
daß bei stark am Membranfilter (30) haftendem Retentat (43) das Membranfilter beim Anheben aus dem retentatbehälter (44) durch einen Abstreifer (48) bewegt wird, der wirksam wird, sobald das Membranfilter aus dem Retentatbehälter herausgehoben wird.

17. Vorrichtung zur Durchführung des Verfahrens nach einem oder mehreren der vorstehenden Ansprüche mit mindestens einem rohrförmigen Membranfilter, mindestens einem Gehäuse für das Membranfilter, Anschlüssen für Einlaß des Feeds, Abgabe des Retentats sowie Druckmitteln zur Bewegung des Feeds,
**dadurch gekennzeichnet**,
daß das rohrförmige Membranfilter (3; 30) an seinen Enden abgeschlossen ist,
daß an das eine Ende des Membranfilters oder an den Ringraum (5) zwischen Gehäuse (2; 33, 40, 44) oder Behälter eine Vakuumquelle (12; 36) anschließbar ist,
daß der zwischen Membranfilter und Gehäuse oder Behälter vorhandene Ringraum oder der Innenraum des Membranfilters mit Feed (11; 41) gefüllt ist, so daß das Feed durch das wirkende Vakuum quer zur Längsrichtung des Membranfilters durch die Filterporen des Membranfilters gesaugt wird,
daß das Gehäuse (2) mit einem Ringkolben (4) versehen ist, der das Membranfilter (3) umgibt und an diesem und an der Innenwandung des Gehäuses (2) anliegt, und daß das Gehäuse mit einem Auslaß (21) für das vom Ringkolben ausgeschobene Retentat versehen ist.

18. Vorrichtung nach Anspruch 17,
**dadurch gekennzeichnet**,
daß das Gehäuse (2) mit einem Eingang für das Feed (11) und einem Auslaß für das Permeat (15) versehen ist.

19. Vorrichtung nach Anspruch 17 oder 18,
**dadurch gekennzeichnet**,
daß das Gehäuse (2) mit seinem Eingang (8) für ein Stabilisatormaterial versehen ist, das durch das wirkende Vakuum an die Außenumfangsfläche oder die Innenumfangsfläche des Membranfilters (3) angesaugt wird.

20. Vorrichtung nach einem der Ansprüche 17 bis 19,
**dadurch gekennzeichnet**,
daß das Gehäuse (2) am Boden im Bereich des Ringraumes (5) zwischen Gehäuse und Membranfilter (3) mit einem Retentatausgang (21) versehen ist.

21. Vorrichtung nach einem der Ansprüche 17 bis 20,
**dadurch gekennzeichnet**,
daß das Gehäuse (2) im Bereich des Ringraumes (5) zwischen Gehäuse und Membranfilter (3) mit Anschlüssen (21, 24) für Saug- oder Druckluftquellen versehen ist, so daß das Retentat (14, 16) am Membranfilter ablösbar ist.

22. Vorrichtung nach einem der Ansprüche 17 bis 21,
**dadurch gekennzeichnet**,
daß der Boden des Gehäuses (2) mit einem Permeatauslaß (15), einem Retentatauslaß (21) und einem Drucklufteingang (26) versehen ist, daß dem unteren Ende des Gehäuses (2) ein Stabilisatorzugang (8), ein Feedrücklauf (20) und ein Feedeingang (10) zugeordnet ist, daß an der Oberseite (6) des Gehäuses (2) ein Vakuumanschluß (12) und ein Drucklufteingang (24) vorgesehen ist, sowie daß dem oberen Ende des Gehäuses (2) ein Luftzufuhreingang (17) zugeordnet ist.

23. Vorrichtung nach einem der Ansprüche 17 bis 22,
**dadurch gekennzeichnet**,
daß als Gehäuse (2) mehrere nach oben offene Behälter (33, 35, 40, 44) vorgesehen sind, in die das Membranfilter (30) einsetzbar ist, daß das Membranfilter (30) oben mit einem Verschlußdeckel (31) versehen ist, der auch die Behälter im eingesetzten Zustand abdichtet.

24. Vorrichtung nach Anspruch 23,
**dadurch gekennzeichnet**,
daß der Behälterboden eines Behälters (44) als Schieber (46) ausgebildet ist.

25. Vorrichtung nach Anspruch 23 oder 24,
**dadurch gekennzeichnet**,
daß der Verschlußdeckel (31) einen Vakuumanschluß besitzt und daß ein Behälter (44) einen Vakuumauslaß (38) besitzt.
